# EUROPEAN PATENT APPLICATION

(11) **EP 4 582 388 A2**
(43) Date of publication of application: **09.07.2025**
(21) Application number: 24218109.7
(22) Date of filing: 06.12.2024
(51) Int. Cl.: C01G 53/42, H01M 4/36, H01M 4/525

(54) **POSITIVE ELECTRODE ACTIVE MATERIAL AND RECHARGEABLE LITHIUM BATTERY INCLUDING THE SAME**

(30) Priority: 12.12.2023 KR 20230179478
(71) Applicant: SAMSUNG SDI CO., LTD., Yongin-si, Gyeonggi-do 17084 (KR)
(72) Inventor: KANG, Taegeun, Yongin-si (KR); CHANG, Donggyu, Yongin-si (KR); JANG, Jungsue, Yongin-si (KR); SHIM, Jaeha, Yongin-si (KR); SEOG, Jihyun, Yongin-si (KR); CHAE, Youngjoo, Yongin-si (KR); PARK, Jingyu, Yongin-si (KR); HONG, Youngjae, Yongin-si (KR)
(74) Representative: Marks & Clerk LLP

(57) **Abstract**

Positive electrode active materials, methods of fabricating the positive electrode active materials, positive electrodes including the positive electrode active materials, and rechargeable lithium batteries including the positive electrodes are disclosed. The positive electrode active material includes a positive electrode active material including a plurality of particles including lithium composite oxide represented by Chemical Formula 1.

Chemical Formula 1 LiₐNiₓM₁₋ₓO_{b}

In Chemical Formula 1, a is about 0.5 to about 1.5. x is about 0.6 to about 0.99. b is about 1.8 to about 2.2. 1-x is about 0.01 to about 0.4. M includes at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. The particle includes Na and S. A mass fraction (Na/S) of the Na to the S is about 0.03 to about 0.2.

## Description

### BACKGROUND

### 1. Field

One or more embodiments of the present disclosure relate to a positive electrode active material, a method of fabricating the positive electrode active material, a positive electrode including the positive electrode active material, and a rechargeable lithium battery including the positive electrode.

### 2. Description of Related Art

A battery, which generates an electric energy through physical or chemical reactions to supply the generated electric energy to the outside (e.g., energy out of the battery), is utilized when no alternating current (AC) power is available to supply to buildings or when direct current (DC) power is desired or required in accordance with the living environment surrounded by one or more suitable electric and/or electronic devices.

Among such batteries, a primary battery and a secondary battery that utilize a chemical reaction are generally utilized. The primary (or non-rechargeable) battery is a consumable battery collectively referred to as a dry battery. In contrast, the secondary battery is a rechargeable battery in which oxidation and reduction reactions are repeated at positive and negative electrodes of the rechargeable battery. The secondary battery is charged if (e.g., when) a current causes the reduction reaction at the positive electrode and is discharged if (e.g., when) the oxidation reaction is performed at the positive electrode. The secondary battery undergoes the repeated charging/discharging.

Lithium composite oxide containing high amount of nickel has attracted considerable attention as a positive electrode active material of rechargeable lithium batteries. The positive electrode active material has a relatively high energy density, but the high amount of nickel induces (or may cause) a problem of a significant reduction in lifespan and stability of such rechargeable lithium batteries.

### SUMMARY

One or more aspects of embodiments of the present disclosure are directed toward a positive electrode active material with a reduced amount of impurities for a rechargeable lithium battery.

One or more aspects of embodiments of the present disclosure are directed toward a rechargeable lithium battery with increased charging/discharging capacity and increased efficiency properties.

Additional aspects will be set forth in part in the description which follows and, in part, will be apparent from the description, or may be learned by practice of the presented embodiments of the disclosure.

According to one or more embodiments of the present disclosure, a positive electrode active material includes a particle (e.g., a plurality of particles each) including a lithium composite oxide represented by Chemical Formula 1.

**Chemical Formula 1** **LiₐNiₓM₁₋ₓO_{b}**

In Chemical Formula 1, a is about 0.5 to about 1.5. x is about 0.6 to about 0.99. b is about 1.8 to about 2.2. 1-x is about 0.01 to about 0.4. M includes at least one element selected from among cobalt (Co), aluminium (Al), manganese (Mn), sodium (Na), magnesium (Mg), calcium (Ca), yttrium (Y), titanium (Ti), hafnium (Hf), vanadium (V), niobium (Nb), tantalum (Ta), chromium (Cr), molybdenum (Mo), tungsten (W), iron (Fe), copper (Cu), silver (Ag), zinc (Zn), boron (B), gallium (Ga), carbon (C), silicon (Si), and tin (Sn). The particle (e.g., each of the particles) includes sodium (Na) (e.g., sodium element) and sulfur (S) (e.g., sulfur element). A mass fraction (Na/S) of the sodium (Na) to the sulfur (S) is about 0.03 to about 0.2.

According to one or more embodiments of the present disclosure, a method of fabricating a positive electrode active material includes: forming (or providing) a nickel-based hydroxide precursor; mixing the nickel-based hydroxide precursor and a lithium raw material to form a mixture; firing the mixture to form a particle (particles) including a lithium composite oxide; and performing a wet coating process on the particle(s). The particle(s) that undergoes the wet coating process include sodium (Na) (e.g., sodium element) and sulfur (S) (e.g., sulfur element). A mass fraction (Na/S) of the sodium (Na) to the sulfur (S) is about 0.03 to about 0.2.

According to one or more embodiments of the present disclosure, a positive electrode for a rechargeable lithium battery includes the positive electrode active material.

According to one or more embodiments of the present disclosure, a rechargeable lithium battery includes the positive electrode.

At least some of the above and other features of the invention are set out in the claims.

### BRIEF DESCRIPTION OF DRAWINGS

The above and other aspects, features, and advantages of certain embodiments of the present disclosure will be more apparent from the following description taken in conjunction with the accompanying drawings.
FIG. 1 illustrates a simplified conceptual diagram showing a rechargeable lithium battery according to one or more embodiments of the present disclosure.
FIGs. 2-5 each illustrate a simplified cross-sectional view showing a rechargeable lithium battery according to one or more embodiments of the present disclosure.

### DETAILED DESCRIPTION

In order to sufficiently understand the configurations and aspects of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the disclosure and let those skilled in the art fully know the scope of the disclosure.

In the present disclosure, it will be understood that, if (e.g., when) an element is referred to as being on another element, the element may be directly on the other element or intervening elements may be present between therebetween. In contrast, "directly on" may refer to that there is no additional layer, film, area, and/or plate between a part such as a layer, film, area and another part. For example, "directly on" may refer to that two layers or two members are arranged without utilizing an additional member such as an adhesive member therebetween. In the drawings, thicknesses of some components may be exaggerated for effectively explaining the technical contents. Like reference numerals refer to like elements throughout the present disclosure, and duplicative descriptions thereof may not be provided for conciseness.

Some embodiments detailed in the disclosure will be discussed with reference to sectional and/or plan views as ideal example views of the disclosure. In the drawings, thicknesses of layers and regions may be exaggerated for effectively explaining the technical contents. Accordingly, regions exemplarily illustrated in the drawings have general properties, and shapes of regions exemplarily illustrated in the drawings are utilized to exemplarily disclose specific shapes of certain embodiments but not to limit the scope of the disclosure. It will be understood that, although the terms "first," "second," "third," and/or the like may be utilized herein to describe one or more suitable elements, these elements should not be limited by these terms. These terms are only utilized to distinguish one element from another element. The one or more embodiments explained and illustrated herein include complementary embodiments thereof.

The terminology utilized herein is for the purpose of describing particular embodiments only and is not intended to limit the present disclosure. As utilized herein, the singular forms "a," "an," and "the" are intended to include the plural forms as well, unless the context clearly indicates otherwise. The terms 'comprise(s)/include(s)/have(has)' and/or 'comprising/including/having' utilized in the disclosure do not exclude the presence or addition of one or more other components.

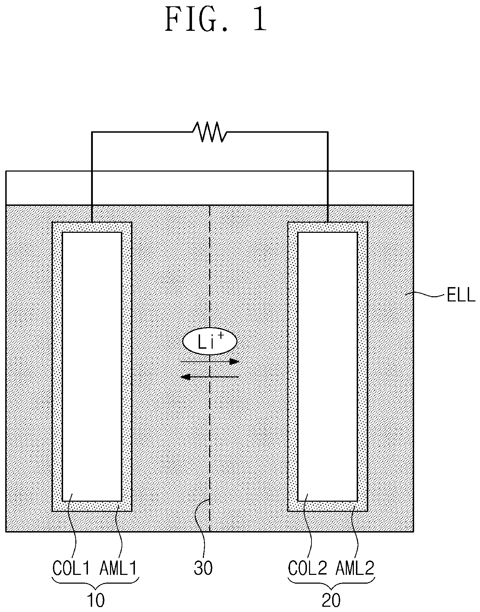

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, an electrolyte ELL, and a separator 30.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in the electrolyte ELL.

The electrolyte ELL may be a medium through which lithium ions are transmitted between the positive electrode 10 and the negative electrode 20. The lithium ions in the electrolyte ELL may pass through the separator 30 to move toward the positive electrode 10 or the negative electrode 20.

The positive electrode 10 may include a first current collector COL1 and a positive electrode active material layer AML1 on the first current collector COL1. The first current collector COL1 may include metal, such as one or more of (e.g., selected from among) aluminium, copper, copper plated with nickel, stainless steels, nickel, titanium, palladium, and aluminium-cadmium alloys. The first current collector COL1 may be shaped like a film, a sheet, a foil, a mesh, a net, a porous substance, a foam, and/or non-woven fabric.

The positive electrode active material layer AML1 may include a binder, a conductive material, and a positive electrode active material. The positive electrode active material may have an amount of about 80 wt% to about 99 wt%, for example, about 85 wt% to about 98 wt%, based on a total weight of the positive electrode active material layer AML1. The positive electrode active material may be a source of lithium ions. The positive electrode active material may be a lithium transition metal oxide including not only lithium but also at least one transition metal. The following will describe in more detail the positive electrode active material according to one or more embodiments of the present disclosure.

The conductive material (e.g., an electrically conductive material) may provide the positive electrode active material layer AML1 with electrical conductivity. The conductive material may include at least one selected from among carbon-based materials (e.g., graphite, carbon black, acetylene black, Ketjen black, furnace black, lamp black, thermal black, and/or carbon fiber), metal powders, metal fibers, conductive whiskers, conductive metal oxides, conductive polymers, and a (e.g., any suitable) combination thereof. In one or more embodiments, the conductive material may have an amount of about 1 wt% to about 30 wt% based on the total weight of the positive electrode active material layer AML1.

The binder may increase a bonding force between the positive electrode active material and the first current collector COL1 and between the positive electrode active material particles. For example, the binder may include at least one selected from among polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylenepropylene-diene monomer (EPDM), a sulfonated EPDM, styrene-butadiene rubber (SBR), fluorine rubber, and a (e.g., any suitable) combination thereof. In one or more embodiments, the binder may have an amount of about 1 wt% to about 30 wt% based on the total weight of the positive electrode active material layer AML1.

The negative electrode 20 may include a second current collector COL2 and a negative electrode active material layer AML2 on the second current collector COL2. A description of the second current collector COL2 may be the same as or similar to that of the first current collector COL1. The second current collector COL2 may include a metal the same as or different from that of the first current collector COL1. The second current collector COL2 may have a shape the same as or different from that of the first current collector COL1.

The negative electrode active material layer AML2 may include a binder, conductive material, and a negative electrode active material. The binder and the conductive material may each be the same as those discussed above in the positive electrode active material layer AML1. In one or more embodiments, the negative electrode active material may have an amount of about 80 wt% to about 99 wt%, for example, about 85 wt% to about 98 wt%, based on a total weight of the negative electrode active material layer AML2. The negative electrode active material may include at least one selected from among (e.g., at least one of) carbonaceous materials, lithium metal, lithium metal compounds, silicon, silicon compounds, tin, and/or tin compounds. In some embodiments, a metal oxide, such as TiO₂ or SnO₂, whose electrical potential is less than about 2 V may also be utilized as the negative electrode active material. The carbonaceous material may include one or more of (e.g., selected from among) low-crystalline carbon and/or high-crystalline carbon.

The separator 30 may include a porous polymer film formed of a polyolefin-based polymer, such as an ethylene homopolymer, a propylene homopolymer, an ethylene-butene copolymer, an ethylene-hexene copolymer, and/or an ethylene-methacrylate copolymer. The separator 30 may include a single layer of a porous polymer film or a stack layer of a plurality of porous polymer films. In some embodiments of the present disclosure, the separator 30 may include a porous non-woven fabric, such as a high-melting-point glass fiber or a polyethylene terephthalate fiber.

The electrolyte ELL may include a salt having a structure of A⁺B⁻. The A⁺ may include at least one alkali metal cation selected from among Li⁺, Na⁺, and K⁺. The B⁻ may include at least one anion selected from among F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In one or more embodiments of the present disclosure, the electrolyte EEL may be utilized by dissolving a salt in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a (e.g., any suitable) mixture (or combination) thereof.

A casing commonly utilized in the art may be adopted as a casing of a rechargeable lithium battery according to one or more embodiments of the present disclosure, and there may be no limitation on external appearance in accordance with the utilization of batteries. For example, the casing of rechargeable lithium batteries may have a cylindrical shape, a prismatic shape, a pouch shape, or a coin shape.

The positive electrode active material according to one or more embodiments of the present disclosure includes a lithium composite oxide represented by Chemical Formula 1, for example, in a form of particles.

**Chemical Formula 1** **LiₐNiₓM₁₋ₓO_{b}**

In Chemical Formula 1, a is 0.5 to 1.5, x is 0.6 to 0.99, b is 1.8 to 2.2, 1-x is 0.01 to 0.4, and M includes at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. In one or more embodiments, M may include at least one selected from among Co, Al, and Mn. The lithium composite oxide represented by Chemical Formula 1 may have a layered crystalline structure.

The lithium composite oxide includes Na and S. The Na and S may be originated from a wet coating process, and, for example, the S may be originated from metal sulfate. A ratio of a weight of Na to a total weight of lithium composite oxide may be in the range of about 0.001 to about 0.002, and a ratio of a weight of S to the total weight of lithium composite oxide may be in the range of about 0.02 to about 0.04. A mass fraction of Na to S (Na/S) is in the range of about 0.03 to about 0.2, for example, about 0.03 to about 0.1, about 0.03 to about 0.07, or about 0.035 to about 0.7.

When the mass fraction (Na/S) has a value within the ranges above, a rechargeable lithium battery including the positive electrode active material may improve in capacity and efficiency properties. When the Na/S is less than about 0.03, an amount of Na may be low to induce a difficulty in maintaining pH desired or required for wet coating. When the Na/S is greater than about 0.2, Na may serve as an impurity to reduce capacity and efficiency.

A "mass fraction" utilized in the present disclosure may be obtained from a result of analyzing an amount of impurities in the positive electrode active material by utilizing an inductively coupled plasma mass spectrometer (ICP-MS).

In one or more embodiments of the present disclosure, x or a mole ratio of Ni in Chemical Formula 1 may be greater than about 0.8. In one or more embodiments, x is about 0.8 to about 0.99. When the lithium composite oxide has a relatively high Ni composition (x>0.8), the lithium composite oxide may be fired at a relatively low temperature. Therefore, lithium composite oxide particles may be formed at a relatively low temperature in fabrication processes of positive electrode active materials for rechargeable lithium batteries which will be discussed. Ni in the lithium composite oxide may affect power and capacity properties of rechargeable lithium batteries. In the present disclosure, lithium composite oxide having a high Ni composition may be utilized to provide a high-power rechargeable lithium battery.

An increase in amount of Ni in lithium composite oxide may reduce stability of a positive electrode or a rechargeable lithium battery. In one or more embodiments of the present disclosure, lithium composite oxide may further include Co, and thus a rechargeable lithium battery may improve in stability and capacity retention properties.

A lithium composite oxide particle according to one or more embodiments of the present disclosure may have an annular shape or a spherical shape. In one or more embodiments of the present disclosure, the lithium composite oxide particle may be a secondary particle in which primary particles are aggregated (e.g., agglomerated). In one or more embodiments of the present disclosure, the lithium composite oxide particle may be a single particle. The single particle may be a primary particle (e.g., a monolithic particle grain) or a secondary particle obtained by aggregating several primary particles. The single particle may include one crystal grain or several crystal grains. The crystal grain may be a minimum unit in which lithium composite oxide has a single crystal orientation. The lithium composite oxide particle according to the present disclosure may include one primary particle and/or one single particle in which a plurality of particles are collectively merged into a single unitary piece.

The lithium composite oxide particle according to one or more embodiments of the present disclosure may have (e.g., include) an average particle diameter of about 10.0 micron (µm) to about 20.0 µm. The term "average particle diameter," or "D50," utilized in the disclosure, may refer to a particle diameter if (e.g., when) a volume accumulation percentage corresponds to 50% in a particle diameter distribution obtained from a volume of particles. For example, the average particle diameter may be measured through a particle size analyzer (PSA).

The following will describe in more detail a method of fabricating a positive electrode active material according to one or more embodiments.

First, a precursor is prepared. The precursor includes Ni and M in Chemical Formula 1 discussed above. M is at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. For example, in some embodiments, M may include Co and Al.

In one or more embodiments, the precursor may be produced by a coprecipitation method. For example, the coprecipitation method may include dissolving a raw material of transition metal in a solvent such as distilled water, and continuously providing a reactor with a transition metal salt solution along with a chelating agent and an alkaline aqueous solution. A precipitate may be collected in the form of slurry, and then a slurry solution may be filtered and dried to obtain metal composite hydroxide or the precursor.

In the present disclosure, the raw material of transition metal may include a metal salt of at least one element selected from among Ni, Co, Al, Mn, Na, Mg, Ca, Y, Ti, Hf, V, Nb, Ta, Cr, Mo, W, Fe, Cu, Ag, Zn, B, Ga, C, Si, and Sn. The metal salt may include sulfate, nitrate, acetate, halide, or hydroxide, and there is no particular limitation as long as a certain material can be dissolved in a solvent. The raw material of transition metal according to one or more embodiments of the present disclosure may include a nickel salt, a cobalt salt, and an aluminium salt. The raw material of transition metal may be mixed by adjusting a mole ratio to allow a positive electrode active material to have relatively high capacity properties. For example, the mole ratio may determine the value of x of Chemical Formula 1.

The precursor and a lithium raw material may be then mixed in a certain ratio to form a mixture. For example, the precursor and the lithium raw material may be mixed in a mole ratio of about 1:1. The lithium raw material may be utilized without particular limitation as long as it is utilized in fabrication of positive electrode active materials. For example, the lithium raw material may include a lithium salt, such as lithium carbonate, lithium nitrate, lithium hydroxide, or lithium sulfate.

The mixture may be added to a furnace and a firing process may be performed at a first temperature. The first temperature may be in the range of about 700 °C to about 1,000 °C. For example, in some embodiments, the first temperature may be in the range of about 700 °C to about 800 °C or about 850 °C to about 950 °C. The firing process may be performed in an oxidizing atmosphere such as air or oxygen. A heat treatment time of the firing process may be about 10 hours to about 30 hours. In one or more embodiments of the present disclosure, before the firing process, a preliminary firing process may be additionally performed at a temperature of about 150 °C to about 800 °C.

The firing process may form lithium composite oxide particles from the mixture including the precursor and the lithium raw material. A grinding process may be performed on the synthesized particles. The ground particles may have an average particle diameter of about 10.0 µm to about 20.0 µm.

A coating process is performed on the obtained lithium composite oxide. The coating process is performed in a wet type or kind. For example, the lithium composite oxide particles may be mixed with a coating raw material. The lithium composite oxide particles and the coating raw material may be added to and mixed in a solvent (e.g., distilled water). The coating raw material may include a metal sulfate.

The metal sulfate may include a compound represented by M1SO₄. M1 may be one selected from among Zr, Al, Na, K, Mg, Ca, Sr, Ni, Co, Ti, B, Sn, Mn, Cr, Fe, and V. For example, in one or more embodiments, the metal sulfate may be CoSO₄ or Al₂(SO₄)₃. The lithium composite oxide particles and the coating raw material may be uniformly (e.g., substantially uniformly) mixed with an agitator. The lithium composite oxide particles may be filtered and dried, and then a surface treatment may be performed on the lithium composite oxide particles. The surface treatment may include performing a heat treatment process in an oxidizing atmosphere such as air or oxygen. The surface treatment may be performed at a temperature of about 300 °C to about 800 °C, for example, at a temperature of about 700 °C.

According to one or more embodiments of the present disclosure, the coating process is performed in a wet type or kind. For example, a metal sulfate powder may be dissolved in distilled water to form a solution, and then the lithium composite oxide (e.g., lithium composite oxide particles) may be added to the solution and agitated for a certain time to perform surface coating. In the metal sulfate solution, the metal sulfate may have an amount of about 0.5 mol% to about 3 mol%. In general, a NaOH aqueous solution is added for pH adjustment in a wet process, but in some embodiments of the disclosure, NaOH may not be provided to reduce an amount of impurities in the positive electrode active material.

In one or more embodiments of the present disclosure, lithium composite oxide having a high Ni composition may be utilized as a positive electrode active material. In these embodiments, there may be an increase in residual lithium value of a primary product active material. The residual lithium may be dissolved in a solvent in a cleaning procedure to thereby act to increase pH, and thus even if (e.g., when) NaOH is not provided, a metal-containing coating may be satisfactorily performed on surfaces of active material particles.

If (e.g., when) NaOH is excluded in a wet coating process, it may reduce an amount of impurities such as Na and S. If (e.g., when) the impurity amount is reduced, a rechargeable lithium battery may improve in charging/discharging capacity and efficiency properties.

The positive electrode 10 of FIG. 1 may be manufactured by a method of fabricating a positive electrode in the art, except that the positive electrode active materials of the present disclosure are utilized. For example, the positive electrode active material, a binder, and a conductive material of the present disclosure may be dissolved or dispersed in a solvent, thereby manufacturing a mixture. The binder and the conductive material may be the same as those discussed in the positive active material layer AML1 of FIG. 1. The mixture may be coated on the first current collector COL1, and then may be dried and compressed to form the positive electrode 10.

The solvent may be a solvent utilized in the art, for example, may include at least one selected from among dimethyl sulfoxide (DMSO), isopropyl alcohol, N-methyl pyrrolidone (NMP), acetone, water, and a (e.g., any suitable) combination thereof.

In one or more embodiments, the mixture may be casted on a certain supporter to manufacture a film or the positive electrode active material layer AML1. The positive electrode 10 may be manufactured by laminating the positive electrode active material layer AML1 on the first current collector COL1.

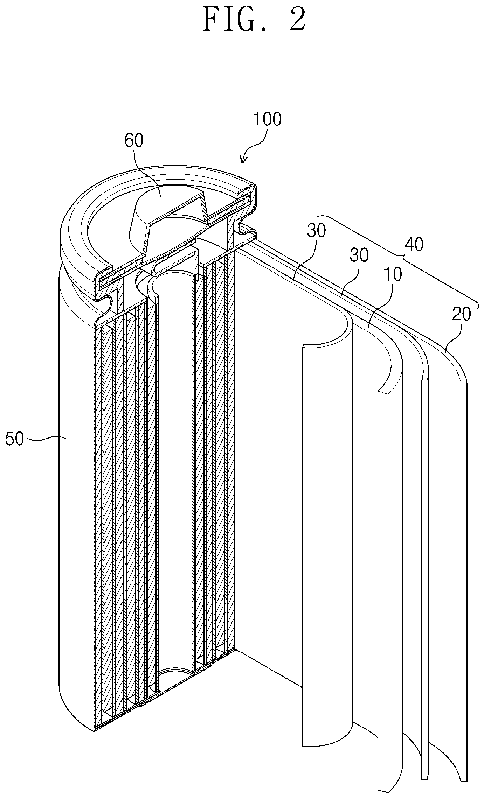

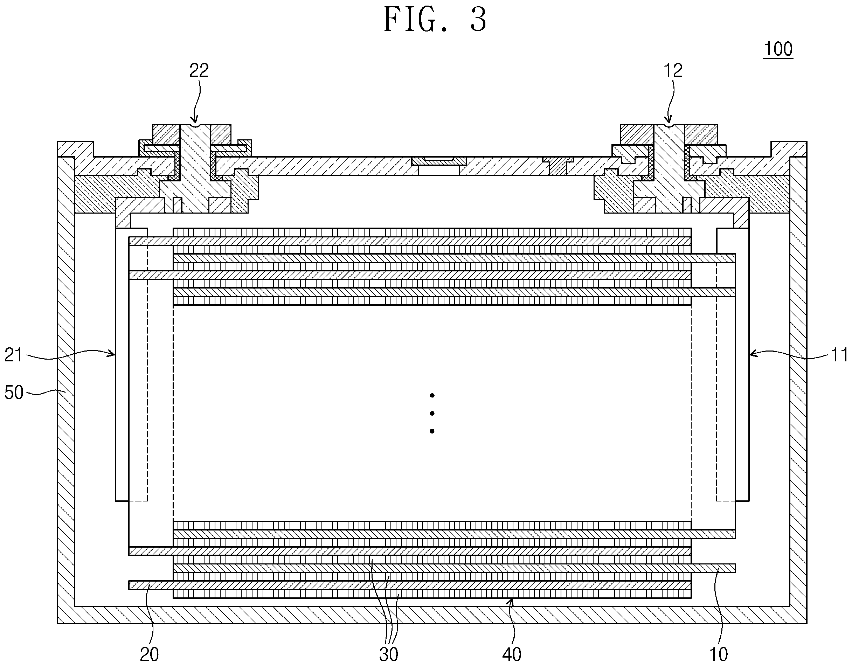

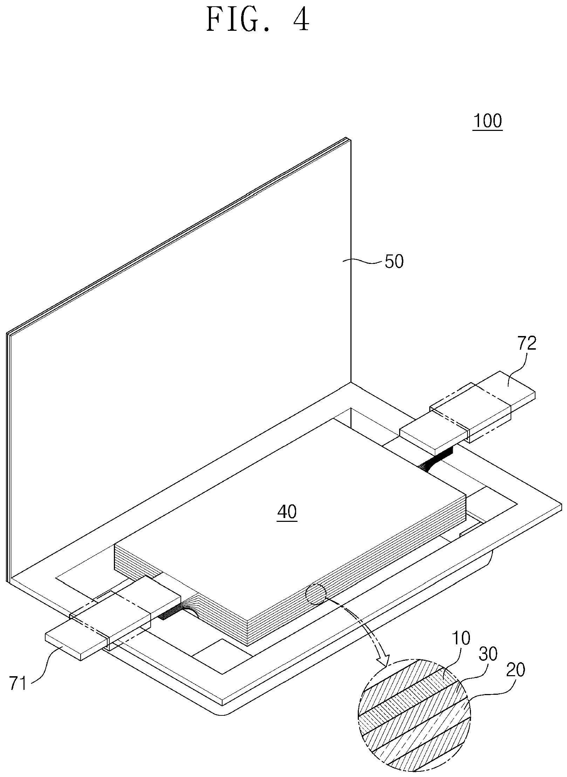

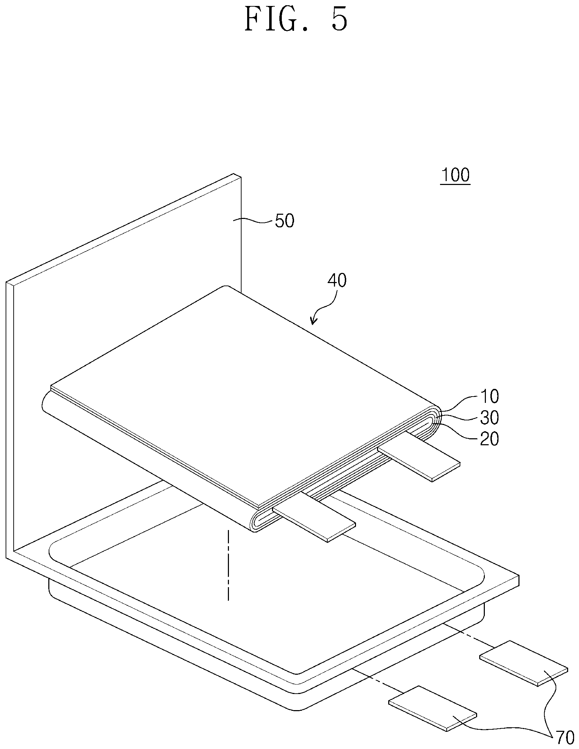

FIG. 2 to FIG. 5 each illustrate a simplified cross-sectional view showing a rechargeable lithium battery according to one or more embodiments of the present disclosure. FIG. 2 shows a cylindrical battery, FIG. 3 shows a prismatic battery, and FIGs. 4 and 5 each show a pouch-type or kind battery. Referring to FIG. 2 to FIG. 5, a rechargeable lithium battery 100 may include a positive electrode 10, a negative electrode 20, and a separator 30. A description of the positive electrode 10, the negative electrode 20, and the separator 30 may be substantially the same as that discussed above in the rechargeable lithium battery of FIG. 1.

The positive electrode 10, the negative electrode 20, and the separator 30 of FIG. 2 may be winded or folded to constitute an electrode assembly 40. The electrode assembly 40 may be accommodated in a battery casing 50. The electrode assembly 40 may include a plurality of electrode assemblies. The separator 30 may be provided between the electrode assemblies. The battery casing 50 may be provided therein with the electrode assemblies that are sequentially stacked. The battery casing 50 may be filled with an electrolyte (see ELL of FIG. 1). The battery casing 50 may be sealed by a cap assembly 60. The battery casing 50 according to one or more embodiments of the present disclosure may have a cylindrical shape (FIG. 2), a prismatic shape (FIG. 3), or a pouch shape (FIG. 3 and FIG. 4). In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGs. 4 and 5, in one or more embodiments, the rechargeable lithium battery 100 may include an electrode tab 70, or a positive electrode tab 71 and a negative electrode tab 72, which serves as an electrical path for externally inducing a current generated in the electrode assembly 40. The rechargeable lithium battery according to one or more embodiments of the present disclosure may be utilized in an apparatus such as notebooks, smart phones, or electric vehicles.

Herein, the present disclosure will be described in more detail with reference to one or more embodiments. The following embodiments are provided for illustrative purpose only and are not to be construed to limit the scope of the disclosure.

### Fabrication of Positive Electrode Active Material

A coprecipitation method was utilized to manufacture nickel-based metal hydroxide (Ni_{0.98}Co_{0.02}(OH)₂) as a precursor. Nickel sulfate (NiSO₄·6H₂O) and cobalt sulfate (CoSO₄·7H₂O) in a mole ratio of 98:2 as a raw material of nickel-based metal hydroxide were dissolved in distilled water as a solvent, thereby preparing a metal raw material mixture solution. An ammonia water (NH₄OH) dilute solution and sodium hydroxide (NaOH) as a precipitant were prepared to form a complex compound. Afterwards, the metal raw material mixture solution, the ammonia water, and the sodium hydroxide were added to a reactor. Sodium hydroxide was added to the reactor to maintain pH of a mixture in the reactor. A reaction was performed for about 20 hours while the mixture was agitated in the reactor.

A slurry solution in the reactor was filtered and washed with high-purity distilled water. The washed material was dried in a hot oven at 190 °C for 24 hours to obtain a precursor powder (Ni_{0.98}Co_{0.02}(OH)₂) having a particle size of about 16 µm, and then oxidized at 300 °C to 500 °C to eventually acquire an oxide precursor powder (Ni_{0.98}Co_{0.02}O₂).

A Henschel mixer was utilized to dry mix the oxide precursor powder and anhydrous lithium hydroxide (LiOH) with each other. Lithium and transition metal were mixed in a mole ratio of about 1:1. The transition metal refers to a total sum (Ni+Co) of transition metals contained in a large-particle oxide precursor powder. The mixture was thermally treated at about 900 °C for 10 hours in an oxygen atmosphere to thereby synthesize lithium composite oxide particles. The particles were grinded with Jet Mill under a pressure of 3 bars to obtain primary particles.

### Embodiment 1

Distilled water was provided with the primary particles along with a coating raw material to coat a particle surface.

For example, after CoSO₄·6H₂O as a coating raw material was dissolved in distilled water to 0.5 mol% to 3 mol%, a total amount of 224 liters was added to a tank, and additionally distilled water (about 625 liters at 9 °C) was added to the tank to mix with a cobalt sulfate solution. The primary particles of about 1,100 kg were added to the metal sulfate solution, and then agitated for a certain time to coat particle surfaces.

In this (e.g., act or task) step, the addition of sodium hydroxide (or NaOH) was omitted. The solution was filtered and dried to obtain coated primary particles. The coated primary particles was thermally treated about 700 °C for 15 hours in an oxygen atmosphere to complete a cobalt (Co) coating process. After the coating process, amounts of impurities in the lithium composite oxide particles and specific surface areas of the lithium composite oxide particles were each measured and listed in Table 1. An inductively coupled plasma (ICP) emission analysis was performed to measure the impurity amounts. The specific surface areas were measured by Brunauer-Emmett-Teller (BET) flow method in which a gas including N₂ of 30% and He of 70% was employed to perform a dynamic flow method (utilizing of Mascorb^{®} HM Model-1208 commercially available from Mountech Co. Ltd.)

### Embodiment 2

The coating process was performed in substantially the same method as that of Embodiment 1, except that additionally added distilled water was under the temperature of 20 °C. After the coating process, amounts of impurities in the lithium composite oxide particles and specific surface areas of the lithium composite oxide particles were each measured and listed in Table 1.

### Embodiment 3

The coating process was performed in substantially the same method as that of Embodiment 1, except that distilled water of about 600 liters was added under the temperature of 20 °C. After the coating process, amounts of impurities in the lithium composite oxide particles and specific surface areas of the lithium composite oxide particles were each measured and listed in Table 1.

### Comparative Example 1

The primary particles were coated in substantially the same method as that of Embodiment 1, except that about 73 liters of NaOH aqueous solution of 20% were slowly added after the primary particles were added to the metal sulfate solution in the coating process of Embodiment 1. Amounts of impurities in the coated primary particles and specific surface areas of the coated primary particles were each measured and listed in Table 1.

### Comparative Example 2

The primary particles were coated in substantially the same method as that of Embodiment 2, except that about 73 liters of NaOH aqueous solution of 20% were slowly added after the primary particles were added to the metal sulfate solution in the coating process of Embodiment 2. Amounts of impurities in the coated primary particles and specific surface areas of the coated primary particles were each measured and listed in Table 1.

### Comparative Example 3

The primary particles were coated in substantially the same method as that of Embodiment 3, except that about 73 liters of NaOH aqueous solution of 20% were slowly added after the primary particles were added to the metal sulfate solution in the coating process of Embodiment 3. Amounts of impurities in the coated primary particles and specific surface areas of the coated primary particles were each measured and listed in Table 1.

### Comparative Example 4

The coating process was performed in substantially the same method as that of Embodiment 1, except that distilled water of about 700 liters was added under the temperature of 20 °C. After the coating process, amounts of impurities in the coated primary particles and specific surface areas of the coated primary particles were each measured and listed in Table 1.

### Comparative Example 5

The primary particles were coated in substantially the same method as that of Comparative Example 4, except that the coated primary particles were thermally treated at about 650 °C for 15 hours in an oxygen atmosphere in the coating process of Comparative Example 4. Amounts of impurities in the coated primary particles and specific surface areas of the coated primary particles were each measured and listed in Table 1.

### Comparative Example 6

The primary particles were coated in substantially the same method as that of Comparative Example 4, except that the coated primary particles were thermally treated at about 750 °C for 15 hours in an oxygen atmosphere in the coating process of Comparative Example 4. Amounts of impurities in the coated primary particles and specific surface areas of the coated primary particles were each measured and listed in Table 1.

**[Table 1]**

| | Impurity (wt%) | | | | | | | Specific surface area (m²/g) | D50 (µm) |
|---|---|---|---|---|---|---|---|---|---|
| | Fe | Cu | Na | Ca | S | Zr | Na/S | | |
| Comparative Example 1 | 0.000 | 0.000 | 0.037 | 0.01 | 0.079 | 0.036 | 0.468 | 0.151 | 15.35 |
| Comparative Example 2 | 0.002 | 0.000 | 0.035 | 0.001 | 0.077 | 0.039 | 0.455 | 0.150 | 15.32 |
| Comparative Example 3 | 0.000 | 0.000 | 0.037 | 0.001 | 0.084 | 0.041 | 0.440 | 0.143 | 15.33 |
| Comparative Example 4 | 0.001 | 0.000 | 0.001 | 0.002 | 0.047 | 0.040 | 0.021 | 0.182 | 15.26 |
| Comparative Example 5 | 0.003 | 0.000 | 0.001 | 0.002 | 0.047 | 0.039 | 0.021 | 0.153 | 15.31 |
| Comparative Example 6 | 0.000 | 0.000 | 0.001 | 0.000 | 0.042 | 0.036 | 0.024 | 0.151 | 15.26 |
| Embodiment 1 | 0.000 | 0.000 | 0.001 | 0.000 | 0.027 | 0.037 | 0.037 | 0.166 | 15.38 |
| Embodiment 2 | 0.000 | 0.000 | 0.001 | 0.000 | 0.023 | 0.033 | 0.043 | 0.193 | 15.37 |
| Embodiment 3 | 0.001 | 0.000 | 0.002 | 0.002 | 0.038 | 0.037 | 0.053 | 0.191 | 15.31 |

Referring to Table 1, as shown in Embodiments 1 to 3, without being bound by any particular theory, it may be ascertained that, if (e.g., when) NaOH is omitted in the wet coating process, there is a significant reduction in amount of Na and S among impurities. In addition, it may be ascertained that there are a remarkable reduction in mass fraction (Na/S) of Na to S and an increase in specific surface area of the positive electrode active material. When a specific surface area is excessively (or substantially) small, reactivity of the positive electrode active material may decrease to reduce capacity and efficiency properties.

### Fabrication of Rechargeable Battery

### Experimental Example 1

A positive electrode active material slurry was manufactured by mixing with each other 96 grams of the positive electrode active material of Example 1, 2 grams of polyvinylidene fluoride, 47 grams of N-methyl pyrrolidone as a solvent, and 2 grams of carbon black as a conductive material.

A doctor blade was utilized to coat the positive electrode active material slurry on an aluminium film to form a thin electrode plate. The electrode plate was dried at 135 °C for 3 hours or more, and then compressed and vacuum dried to form a positive electrode.

The positive electrode and a lithium metal counter electrode were utilized to manufacture a 2032-type or kind coin cell. A separator (having a thickness of about 16 µm) formed of a porous polyethylene (PE) film was interposed between the positive electrode and the lithium metal counter electrode. An electrolyte was introduced to manufacture the 2032-type or kind coin cell. The electrolyte was a solution in which LiPF₆ of 1.1 M was dissolved in a solvent in which ethylene carbonate (EC) and ethylmethyl carbonate (EMC) were mixed in a volume ratio of 3:5.

Three coin cells ware fabricated for each sample, and an apparatus commercially available from Toyo system Co. Ltd. was utilized to evaluate charging/discharging capacity and efficiency of the fabricated rechargeable battery at a condition of 0.2 C/0.2 C (3-4.3 V).

Measured capacity properties were listed in Table 2.

### Experimental Example 2

The rechargeable battery was fabricated by substantially the same method as that of Experimental Example 1, except that the positive electrode active material of Embodiment 2 was utilized. The same method as that of Experimental Example 1 was employed to measure charging/discharging capacity and efficiency properties of the rechargeable battery, and the measured properties were listed in Table 2.

### Experimental Example 3

The rechargeable battery was fabricated by substantially the same method as that of Experimental Example 1, except that the positive electrode active material of Embodiment 3 was utilized. The same method as that of Experimental Example 1 was employed to measure charging/discharging capacity and efficiency properties of the rechargeable battery, and the measured properties were listed in Table 2.

### Comparative Experimental Example 1

The rechargeable battery was fabricated by substantially the same method as that of Experimental Example 1, except that the positive electrode active material of Comparative Example 1 was utilized. The same method as that of Experimental Example 1 was employed to measure charging/discharging capacity and efficiency properties of the rechargeable battery, and the measured properties were listed in Table 2.

### Comparative Experimental Example 2

The rechargeable battery was fabricated by substantially the same method as that of Experimental Example 1, except that the positive electrode active material of Comparative Example 2 was utilized. The same method as that of Experimental Example 1 was employed to measure charging/discharging capacity and efficiency properties of the rechargeable battery, and the measured properties were listed in Table 2.

### Comparative Experimental Example 3

The rechargeable battery was fabricated by substantially the same method as that of Experimental Example 1, except that the positive electrode active material of Comparative Example 3 was utilized. The same method as that of Experimental Example 1 was employed to measure charging/discharging capacity and efficiency properties of the rechargeable battery, and the measured properties were listed in Table 2.

### Comparative Experimental Example 4

The rechargeable battery was fabricated by substantially the same method as that of Experimental Example 1, except that the positive electrode active material of Comparative Example 4 was utilized. The same method as that of Experimental Example 1 was employed to measure charging/discharging capacity and efficiency properties of the rechargeable battery, and the measured properties were listed in Table 2.

### Comparative Experimental Example 5

The rechargeable battery was fabricated by substantially the same method as that of Experimental Example 1, except that the positive electrode active material of Comparative Example 5 was utilized. The same method as that of Experimental Example 1 was employed to measure charging/discharging capacity and efficiency properties of the rechargeable battery, and the measured properties were listed in Table 2.

### Comparative Experimental Example 6

The rechargeable battery was fabricated by substantially the same method as that of Experimental Example 1, except that the positive electrode active material of Comparative Example 6 was utilized. The same method as that of Experimental Example 1 was employed to measure charging/discharging capacity and efficiency properties of the rechargeable battery, and the measured properties were listed in Table 2.

**Table 2**

| 0.2 C/0.2 C charging/discharging (1 cycle) | | | |
|---|---|---|---|
| | Charging capacity | Discharging capacity | Efficiency (%) |
| Comparative Experimental Example 1 | 246.5 | 218.5 | 88.6 |
| Comparative Experimental Example 2 | 247.8 | 219.3 | 88.5 |
| Comparative Experimental Example 3 | 247.9 | 219.7 | 88.6 |
| Comparative Experimental Example 4 | 247.9 | 219.4 | 88.5 |
| Comparative Experimental Example 5 | 247.6 | 219.6 | 88.7 |
| Comparative Experimental Example 6 | 248.0 | 219.7 | 88.6 |
| Experimental Example 1 | 247.7 | 222.4 | 89.8 |
| Experimental Example 2 | 247.3 | 222.3 | 89.9 |
| Experimental Example 3 | 247.4 | 222.3 | 89.9 |

Referring to Table 2, if (e.g., when) the mass fraction (Na/S) of Na to S in the positive electrode active material is in a range between 0.03 to 0.2, it may be ascertained that the rechargeable battery has relatively large charging/discharging capacity and relatively high efficiency properties.

The positive electrode active material for a rechargeable lithium battery according to the present disclosure may include sodium (Na) and sulfur (S), and a mass fraction (Na/S) of Na to S may be in a range of about 0.03 to about 0.2.

Accordingly, the rechargeable lithium battery including the positive electrode active material of the present disclosure may improve in capacity and efficiency properties.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation. "A or B" or "A and/or B" may refer to "including A, including B, or including A and B." Further, the utilization of "may" when describing embodiments of the present disclosure refers to "one or more embodiments of the present disclosure."

In the present disclosure, when particles are spherical, "diameter" indicates a particle diameter or an average particle diameter, and when the particles are non-spherical, the "diameter" indicates a major axis length or an average major axis length. The diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter is referred to as D50. D50 refers to the average diameter of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the disclosure has been described in connection with what is presently considered to be practical embodiments, it is to be understood that the present disclosure is not limited to the disclosed embodiments and is intended to cover one or more suitable modifications and equivalent arrangements included within the scope of the appended claims and equivalents thereof, and therefore the aforementioned embodiments should be understood to be exemplarily but not limiting this disclosure in any way.

## Claims

1. A positive electrode active material, comprising a plurality of particles each comprising a lithium composite oxide represented by Chemical Formula 1,
Chemical Formula 1 LiₐNiₓM₁₋ₓO_{b}
wherein, in Chemical Formula 1,
a is about 0.5 to about 1.5,
x is about 0.6 to about 0.99,
b is about 1.8 to about 2.2,
1-x is about 0.01 to about 0.4,
M comprises at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn,
each of the particles comprises sodium (Na) and sulfur (S), and
a mass fraction (Na/S) of the sodium (Na) to the sulfur (S) is about 0.03 to about 0.2.

2. The positive electrode active material as claimed in claim 1, wherein the x is about 0.8 to about 0.99.

3. The positive electrode active material as claimed in claim 1 or claim 2, wherein the lithium composite oxide has a layered crystalline structure.

4. The positive electrode active material as claimed in any one of claims 1 to 3, wherein each of the particles comprises a secondary particle comprising a plurality of primary particles.

5. The positive electrode active material as claimed in any one of claims 1 to 4, wherein an average particle dimeter of the plurality of the particles is about 10.0 µm to about 20.0 µm.

6. The positive electrode active material as claimed in any one of claims 1 to 5, wherein
the sodium (Na) and the sulfur (S) are from a wet coating process, and
NaOH is excluded in the wet coating process.

7. A method of fabricating a positive electrode active material, the method comprising:
forming a nickel-based hydroxide precursor;
mixing the nickel-based hydroxide precursor and a lithium raw material to form a mixture;
firing the mixture to form a plurality of particles each comprising a lithium composite oxide; and
performing a wet coating process on the particles,
wherein, after the performing of the wet coating process on the particles, coated particles comprises sodium (Na) and sulfur (S), and
wherein a mass fraction (Na/S) of the sodium (Na) to the sulfur (S) is about 0.03 to about 0.2.

8. The method as claimed in claim 7, wherein,
the wet coating process comprises mixing the particles with a solution comprising a metal sulfate, and
the wet coating process excludes an addition of NaOH.

9. The method as claimed in claim 8, wherein the metal sulfate comprises cobalt sulfate.

10. The method as claimed in claim 8 or claim 9, wherein the sulfur (S) is from the metal sulfate.

11. The method as claimed in any one of claims 7 to 10, before the performing of the wet coating process, the method further comprising grinding the particles.

12. The method as claimed in any one of claims 7 to 11, wherein an average particle diameter of the particles is about 10.0 µm to about 20.0 µm.

13. The method as claimed in any one of claims 7 to 12, wherein the performing of the wet coating process comprises:
mixing the particles with a metal sulfate solution; and
performing a heat treatment process on the coated particles.

14. A positive electrode for a rechargeable lithium battery, the positive electrode comprising the positive electrode active material as claimed in any one of claims 1 to 6.

15. A rechargeable lithium battery comprising the positive electrode as claimed in claim 14.
